# EUROPEAN PATENT SPECIFICATION

(11) **EP 0 501 282 B1**
(45) Date of publication and mention of the grant of the patent: **18.09.1996**
(21) Application number: 92102676.1
(22) Date of filing: 18.02.1992
(51) Int. Cl.: H04Q 7/06

(54) **Selective pager receiver**
Selektiver Personenrufempfänger
Récepteur sélectif d'appel de personnes

(30) Priority: 19.02.1991 JP 45928/91
(43) Date of publication of application: 02.09.1992
(73) Proprietor: NEC CORPORATION, Tokyo (JP)
(72) Inventor: Mochizuki, Yasuyuki, c/o NEC Corporation, Minato-ku, Tokyo (JP)
(74) Representative: VOSSIUS & PARTNER

(56) References cited:
- US-A- 4 378 551
- US-A- 4 392 135
- US-A- 4 879 758

## Description

The present invention relates to a selective pager receiver and, more particularly, to a selective pager receiver for informing of a reception by using, e.g., an audible tone, light emission, vibration, and display.

Upon receiving a call, a conventional radio selective pager receiver of this type performs a reception informing function by using, e.g., an audible tone, light emission, vibration, and display. In order to reset these reception informing functions, the receiver has an auto reset function for automatically performing resetting and a manual reset function by which a user performs resetting by depressing a reset button. Although a user can arbitrarily select either of the two reset functions, a selected reset function is unconditionally set up for all of the various reception informing functions described above.

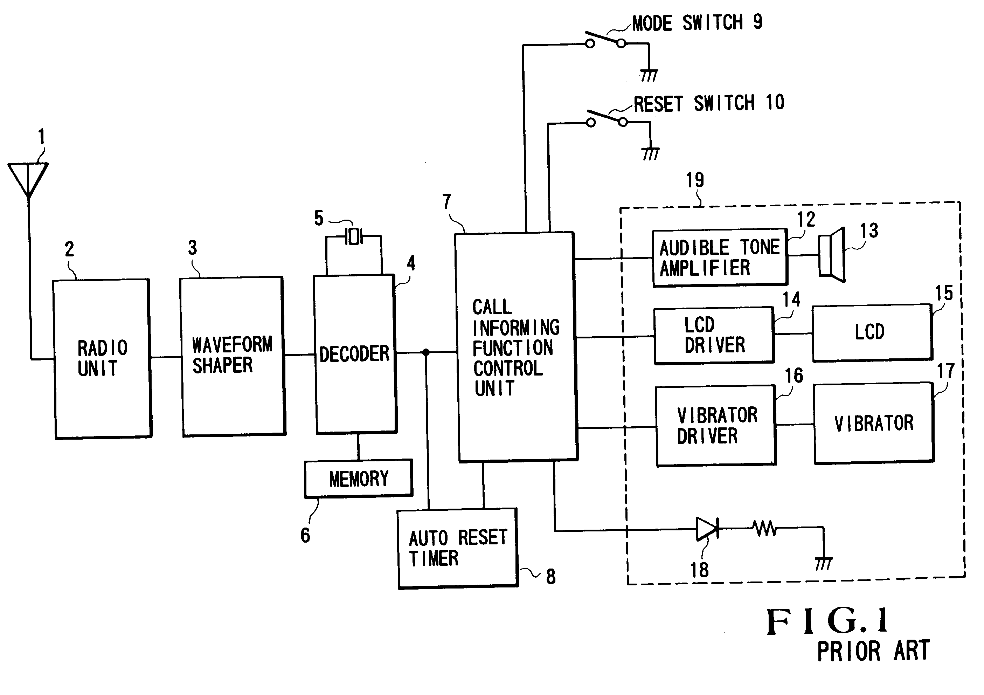

Fig. 1 is a block diagram showing a conventional selective pager receiver. Referring to Fig. 1, a radio signal received by an antenna 1 is amplified and demodulated by a radio unit 2. This demodulated signal is shaped by a waveform shaper 3 into a waveform which can be read by a decoder 4. The decoder 4 produces reference clocks by means of a quartz oscillator 5 and compares a receiver call number stored in a memory unit 6 with the signal from the waveform shaper 3 in synchronism with the received signal. If the two numbers coincide with each other as a result of this comparison, the decoder 4 determines that the pager receiver is called and sends a signal to a call informing function control unit 7 and an auto reset timer 8. The auto reset timer 8 is activated by the signal from the decoder 4 and supplies a signal to the control unit 7 if a predetermined duration has elapsed. The timer 8 is activated by a signal from the control unit 7 as well as that from the decoder 4. The call informing function control unit 7 is connected to the auto reset timer 8, a mode switch 9 for switching between an auto reset mode and a manual reset mode of call informing functions, a reset switch 10 for manual reset which operates upon depression of a reset button, and a call informing function unit 19. The call informing function unit 19 is constituted by an audible tone amplifier 12, a loudspeaker 13, an LCD driver 14, a display device 15, a vibrator driver 16, a vibrator 17, and an LED 18.

The call informing function control unit 7 receives the signal from the decoder 4 and sends an audible tone signal to the audible tone amplifier 12 to drive the loudspeaker 13. At the same time, the call informing function control unit 7 drives the LCD 15 via the LCD driver 14 to display information indicating that this receiver is called, drives the vibrator 17 via the vibrator driver 16, and causes the LED 18 to emit light, thereby informing a user of the call for his or her receiver. The call informing function control unit 7 may drive some of the informing function set by a switch as not shown as well as all of them.

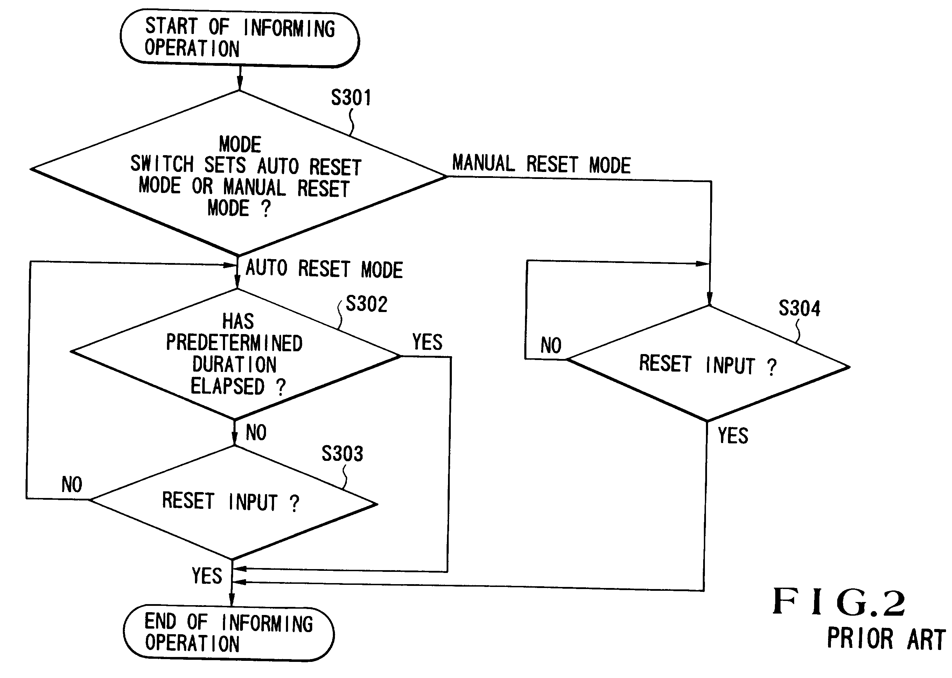

As shown in a flow chart of Fig. 2, the call informing function control unit 7 checks the state of the mode switch 9 (step S301). When the auto reset mode is set, the call informing function control unit 7 drives the informing functions and simultaneously activates the auto reset timer 8. When a predetermined duration has elapsed, the call informing function control unit 7 stops the informing functions in response to a signal from the auto reset timer 8 (step S302). When the reset switch 10 is depressed during execution of the call informing functions, the call informing functions are stopped regardless of whether the manual reset mode or the auto reset mode is set (steps S303 and S304).

The conventional selective pager receiver described above has the following problems. That is, setting of the manual reset and the auto reset of the reception informing functions cannot be independently performed for individual reception informing functions. Therefore, when a reception informing function which consumes a large amount of current, such as a vibration reception informing operation using the vibrator or a display reception informing operation using the LCD is performed in case that the manual reset function is set, this informing operation continues until a user depresses the reset switch to stop the informing operation. For this reason, if a user is unaware of the operation of the reception informing function or if he or she is not present near the pager receiver, current is wastefully consumed to shorten the service life of a battery. In addition, the reset function cannot be selected in accordance with the degree of emergency of a call. Therefore, even in the event of an emergency call, the call is reset when a predetermined duration has elapsed if the auto reset function is set. US-A-4 378 551 discloses a radio signal receiver with a security circuitry with operator controlled switches for actuating the receiver in a different mode of operation and optional feature circuitry for providing various optional functions, such as automatic reset, single/dual function or battery saving function.

It is an object of the present invention to provide a selective pager receiver which prevents unnecessary current consumption upon a reception informing operation even if a user is unaware of the reception informing operation, which prolongs the service life of a battery, and/or which can reliably call a user in the event of an emergency call. These objects are solved with the features of the claims.

A selective pager receiver as described comprises a plurality of call informing means for informing a user of a call, detecting means for comparing information included in a received radio signal with a preassigned selective call number of the receiver to detect a call for the receiver, mode switching means for performing switching between a manual reset mode for manually stopping an operation of each of the call informing means and an auto reset mode for automatically stopping the operation, setting means for performing selection for automatically stopping the operation of each call informing means in the manual reset mode, and timer means for automatically stopping any of the call informing means selected by the setting means when a predetermined duration has elapsed from start of calling in the manual mode.
Fig. 1 is a block diagram showing a conventional selective pager receiver;
Fig. 2 is a flow chart for explaining the operation of a call informing function control unit shown in Fig. 1.
Fig. 3 is a block diagram showing an embodiment of a selective pager receiver of the present invention;
Fig. 4 is a flow chart for explaining the operation of a call informing function control unit shown in Fig. 3;
Fig. 5 is another flow chart for explaining the operation of a call informing function control unit in Fig.3;
Fig. 6 is a block diagram showing another embodiment of the selective pager receiver of the present invention;
Fig. 7 is a flow chart for explaining the operation of a call informing function control unit shown in Fig. 6; and
Fig. 8 is another flow chart for explaining the operation of the call informing function control unit shown in Fig. 6.

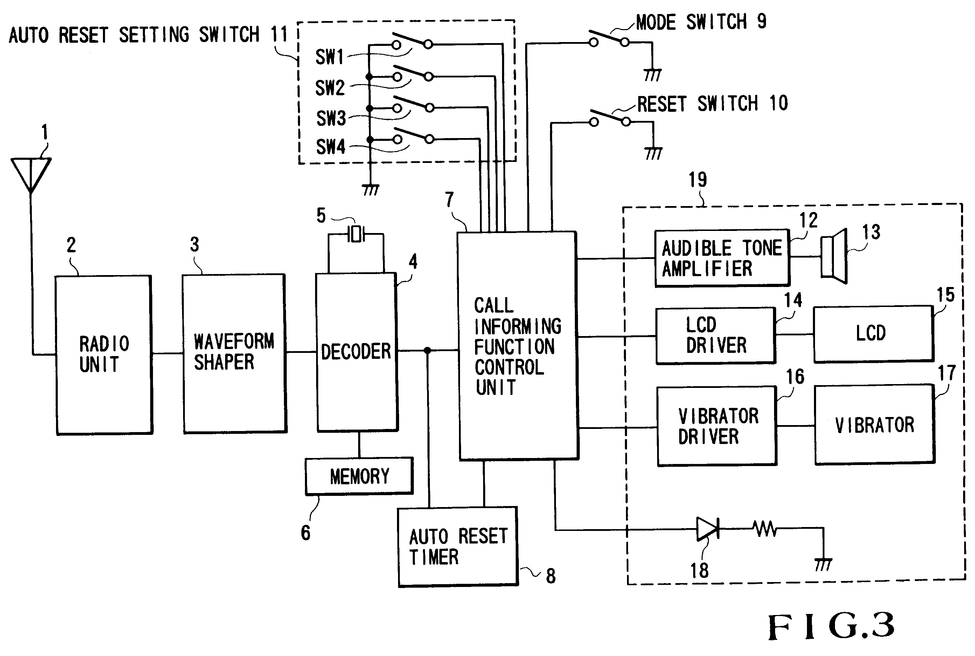

Fig. 3 shows an embodiment of a selective pager receiver of the present invention. Referring to Fig. 3, a radio signal received by an antenna 1 is amplified and demodulated by a radio unit 2. This demodulated signal is shaped by a waveform shaper 3 into a waveform which can be read by a decoder 4. The decoder 4 produces reference clocks by means of a quartz oscillator 5 and compares a receiver call number stored in a memory unit 6 with the signal from the waveform shaper 3. If the two numbers coincide with each other, the decoder 4 determines that the pager receiver is called and sends a signal to a call informing function control unit 7 and an auto reset timer 8. The auto reset timer 8 is activated by the signal from the decoder 4 and supplies a signal to the control unit 7 if a predetermined duration has elapsed. The timer 8 is activated by a signal from the control unit 7 as well as the signal from the decoder 4. The call informing function control unit 7 is connected to the auto reset timer 8, a mode switch 9 for performing switching between an auto reset mode and a manual reset mode of call informing functions, a reset switch 10 for manual reset, an auto reset setting switch 11 for selecting auto reset or manual reset for each informing function when a manual reset mode is set, and a call informing function unit 19 similar to that shown in Fig. 1. The auto reset setting switch 11 is constituted by set switches SW1 to SW4 for an audible tone, display, vibration, and light emission.

The call informing function control unit 7 receives the signal from the decoder 4 and sends an audible tone signal to an audible tone amplifier 12 to drive a loudspeaker 13. At the same time, the call informing function control unit 7 drives an LCD 15 via an LCD driver 14 to display information indicating that this receiver is called, drives a vibrator 17 via a vibrator driver 16, and causes an LED 18 to emit light, thereby informing a user of the call for his or her receiver. The call informing function control unit 7 may drive some of the informing function set by a switch as not shown as well as all of them.

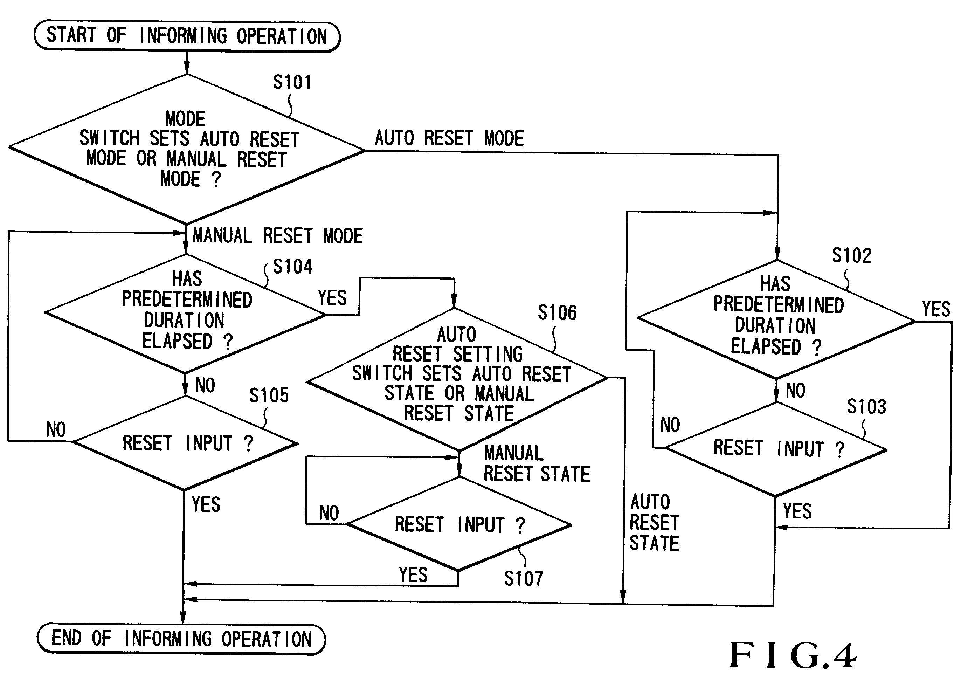

As shown in a flow chart of Fig. 4, the call informing function control unit 7 checks the state of the mode switch 9 (step S101). If the auto reset mode is set, the call informing function control unit 7 stops all of the informing functions or selected informing functions in response to a signal from the auto reset timer 8 when a predetermined duration has elapsed (step S102). If the manual reset mode is set and the reset switch 10 is turned on during a predetermined period over which no signal comes from the reset timer 8, the call informing function control unit 7 unconditionally stops all of the informing functions (step S105). If a predetermined duration has elapsed with no input from the reset switch 10 (step S104), the call informing function control unit 7 checks the state of the auto reset setting switch 11 for selecting auto reset or manual reset for each informing function (step S106). The call informing function control unit 7 stops the operation of an informing function to be automatically reset and continues the operation of an informing function to be manually reset (steps S106 and S107). When the reset switch 10 is depressed during execution of the call informing functions, all of the call informing functions are stopped regardless of whether the manual reset mode or the auto reset mode is set (steps S103 and S107).

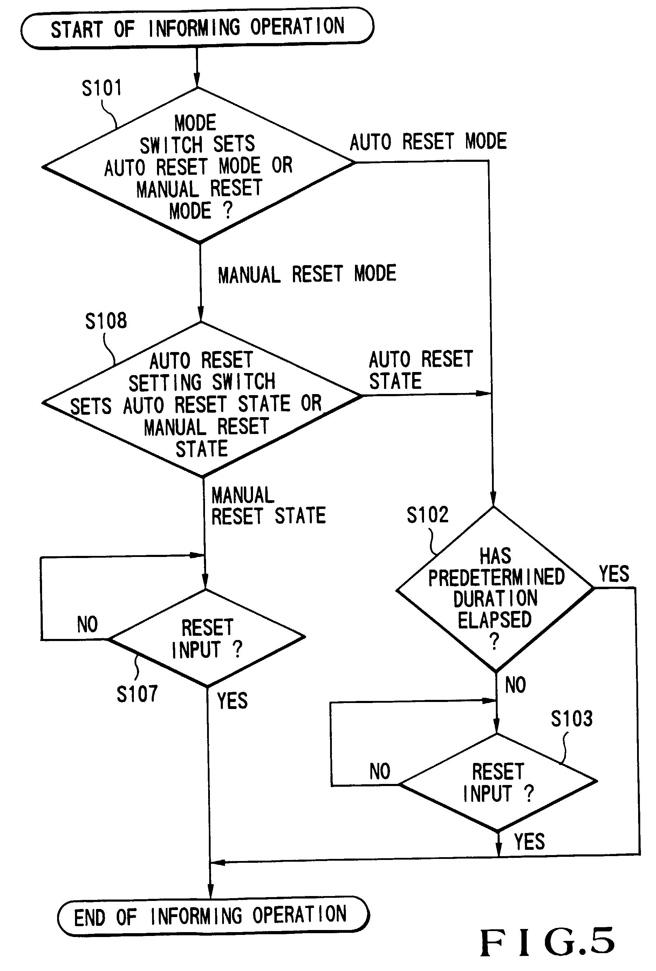

Fig. 5 shows another flow chart of operation of the control unit 7 in Fig. 3.

Referring to Fig. 5, if an auto reset mode is set (step S101), the call informing function control unit 7 stops informing functions by using a signal from the auto reset timer 8 when a predetermined duration has elapsed (step S102). If a manual reset mode is set (step S101), the call informing function control unit 7 checks the state of the auto reset setting switch 11 for selecting auto reset or manual reset for each informing function (step S108). If the auto reset state is set (step S108), it decides whether the predetermined duration has elapsed or not (step S102). If the manual reset state is set (step S108), it goes to step S107. When the reset switch 10 is depressed during execution of the call informing functions, all of the call informing functions are stopped regardless of whether the manual reset mode or the auto reset mode is set (steps S103 and S107).

As a result, even if a user is unaware of the operations of the reception informing functions and does not depress the reset button when the reception informing functions are set in the manual reset mode, the operations of reception informing functions which consume a large amount of current, such as the vibrator and the LCD, can be stopped in a predetermined duration by setting the auto reset mode for these functions. Therefore, it is possible to suppress wasteful consumption of a battery due to these reception informing functions and consequently prolong the service life of the battery.

The auto reset setting switch 11 may be constituted by a ROM, and informing means to be automatically reset in the manual reset mode may be predetermined.

In this embodiment, 20 seconds and 8 seconds can be set as the predetermined durations in the auto reset mode.

Note that the reset timer 8 is used in both the auto reset mode and the manual reset mode in the above embodiment, but independent timers may be provided for the respective modes to define different predetermined durations.

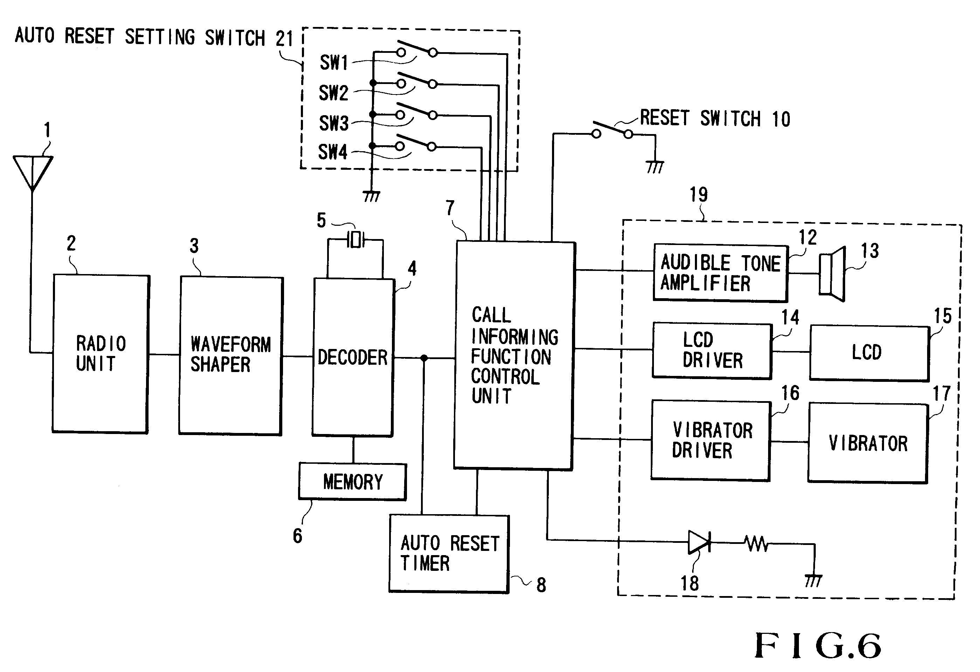

Figs. 6 to 8 are a block diagram and flow charts showing another embodiment of the present invention in which an emergency call is set in a manual reset mode and an ordinary call is set in an auto reset mode.

Referring to Fig. 6, a memory unit 6 stores two call numbers respectively for an emergency call and an ordinary call. A decoder 4 compares the call numbers of this receiver with a signal from a waveform shaper 3. If either of the two numbers coincides with the signal, the decoder 4 determines that the receiver is called by an emergency call or an ordinary call and sends a signal to a call informing function control unit 7 and an auto reset timer 8. The call informing function control unit 7 is connected to the auto reset timer 8, a reset switch 10 for manual reset, an emergency call auto reset setting switch 21 for selecting the auto or manual reset mode for each informing function for an emergency call, and a call informing function unit 19.

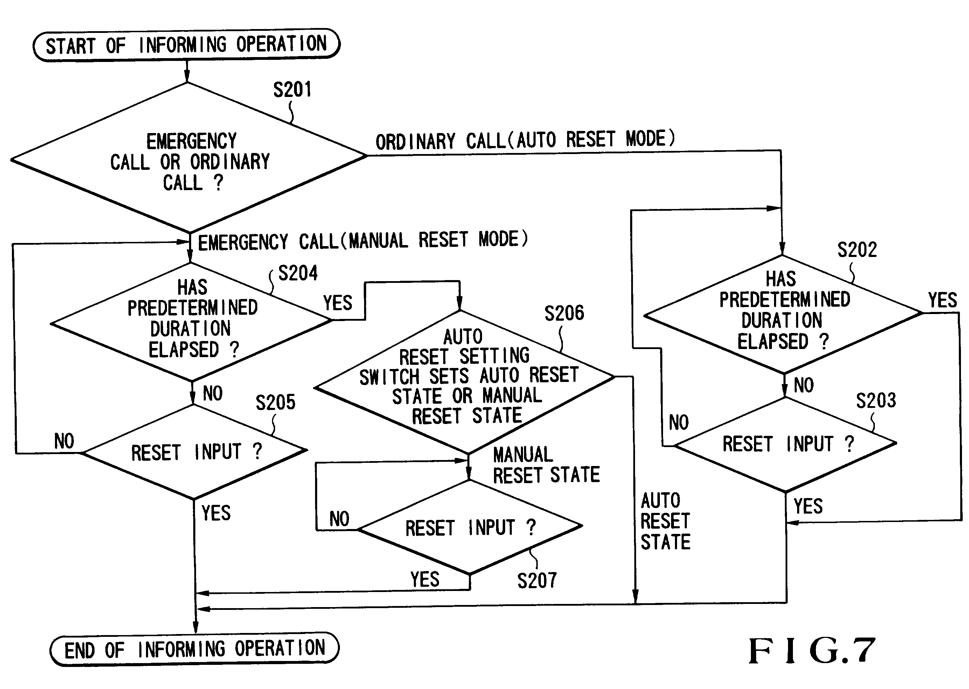

Referring to Fig. 7, if a call for the receiver is an ordinary call (step S201), the call informing function control unit 7 stops informing functions by using a signal from the auto reset timer 8 when a predetermined duration has elapsed (step S202). If the call is an emergency call, when a predetermined duration has elapsed (step S204), the call informing function control unit 7 checks the state of the emergency call auto reset setting switch 21 for selecting the auto or manual reset state for each informing function (step S206). The call informing function control unit 7 stops the operation of an informing function to be automatically reset and continues the operation of an informing function to be manually reset (step S207). When the reset switch 10 is depressed during execution of the call informing functions, all of the call informing functions or selected call informing functions are stopped regardless of whether manual reset mode for an emergency call or auto reset mode for an ordinary call is set or whether a predetermined duration has elapsed (steps S203, S205, and S207).

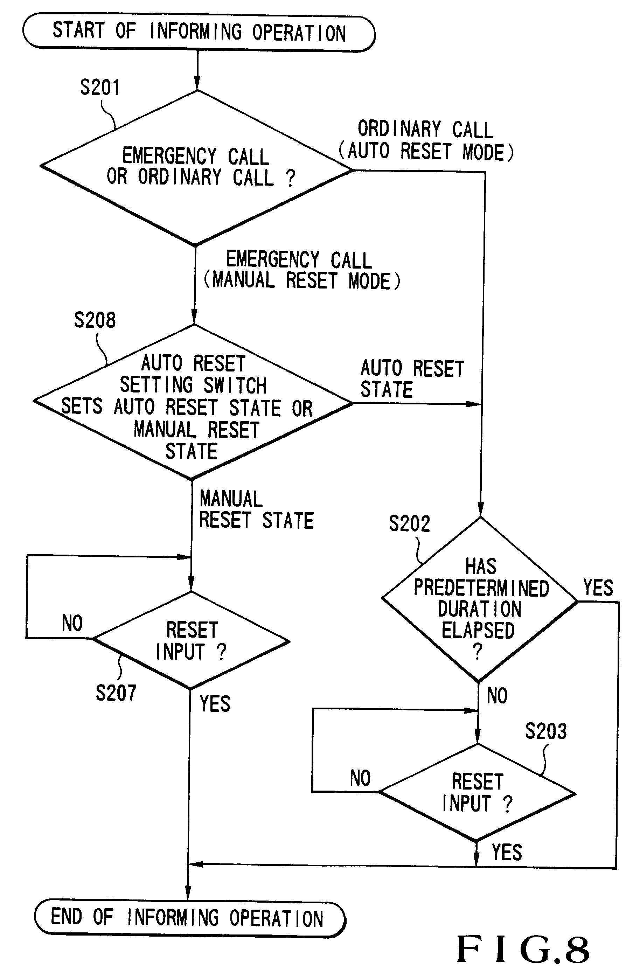

Referring to another flow chart Fig. 8, if a call for the receiver is an ordinary call (step S201), the call informing function control unit 7 stops informing functions by using a signal from the auto reset timer 8 when a predetermined duration has elapsed (step S202). If the call is an emergency call (step S201), the call informing function control unit 7 checks the state of the emergency call auto reset setting switch 21 for selecting the auto or manual reset state for each informing function (step S208). If the auto reset state is set (step S208), it goes to step S202. If the manual reset state is set (step S208), it goes to step S207. When the reset switch 10 is depressed during execution of the call informing functions, all of the call informing functions are stopped regardless of whether manual reset mode for an emergency call or auto reset mode for an ordinary call is set or whether a predetermined duration has elapsed (steps S203 and S207).

According to the present invention, as has been described above, even when various reception informing functions are switched to a manual reset state, reception informing functions set by the auto reset setting switch can be automatically reset when a predetermined duration measured by a timer has elapsed. Therefore, even if a user forgets to depress the reset button, the operation of a reception informing function, such as display or vibration, which consumes a large amount of current can be stopped when a predetermined duration has elapsed. As a result, since unnecessary current consumption can be prevented, the service life of a battery can be prolonged. In addition, since manual reset mode is automatically selected in the event of an emergency call, a user can be surely called.

## Claims

1. A selective pager receiver comprising:
a) a plurality of call informing means (13, 15, 17, 18) for informing a user of a call;
b) optional detecting means (4) for comparing information included in a received radio signal with a preassigned selective call number of said receiver to detect a call for said receiver;
c) mode switching means (9) for performing switching between a manual reset mode for manually stopping an operation of each of said call informing means (13, 15, 17, 18) and an auto reset mode for automatically stopping the operation;
d) setting means (11) for selectively setting in the auto reset mode any one of said call informing means (13, 15, 17, 18) when the manual reset mode has been chosen; and
e) optional timer means (8) for automatically stopping any of said call informing means (13, 15, 17, 18) selected by said setting means (11) when a predetermined duration has elapsed from start of calling in the manual reset mode.

2. A receiver according to claim 1, wherein said setting means (11) comprises a plurality of setting switches (SW1 - SW4) provided in a one-to-one correspondence with said plurality of call informing means (13, 15, 17, 18).

3. A receiver according to claim 1 or 2, wherein said call informing means (13, 15, 17, 18) perform call informing operations by using an audible tone, light emission, vibration, and display.

4. A receiver according to claim 1,2, or 3, further comprising call informing control means (7) for starting the operation of each call informing means (13, 15, 17, 18) and operating said timer means (8) upon detecting a call for said receiver in accordance with an output from said detecting means (4), checking a state of said mode switching means (9) in accordance with an output from said timer means (8) when a predetermined duration has elapsed, checking a state of said setting means (11) when said mode switching means (9) is in a manual mode, and stopping an operation of said call informing means (13, 15, 17, 18) selected by said setting means (11).

5. A receiver according to any one of claims to 4, wherein said timer means (8) is an auto reset timer for automatically stopping each call informing means (13, 15, 17, 18) when a predetermined duration has elapsed after start of calling in the auto reset mode, and the predetermined duration from the start of calling to the automatic stop is the same in the manual mode and the auto reset mode.

6. A receiver according to any one of claims 1 to 4, wherein said timer means (8) is provided independently of an auto reset timer for automatically stopping each call informing means (13, 15, 17, 18) when a predetermined duration has elapsed from start of calling in the auto reset mode, and the predetermined duration from the start of calling to the automatic stop in the manual mode is different from that in the auto reset mode.

7. A selective pager receiver comprising:
a plurality of call informing means (13, 15, 17, 18) for informing a user of a call;
call informing detecting means (4) for comparing information included in a received radio signal with preassigned selective call numbers for an ordinary call and an emergency call of said receiver to perform detection of a call for said receiver and identification of a type of the call;
setting means (21) for selectively setting in the auto reset mode any one of said call informing means (13, 15, 17, 18) upon calling by the emergency call; and
timer means (8) for automatically stopping any of said call informing means (13, 15, 17, 18) selected by said setting means (21) when a predetermined duration has elapsed from start of calling if the calling is performed by the emergency call.

8. A receiver according to claim 7, wherein said setting means (21) comprises a plurality of setting switches (SW1 - SW4) provided in a one-to-one correspondence with said plurality of call informing means.

9. A receiver according to claim 7 or 8, wherein said call informing means (13, 15, 17, 18) perform call informing operations by using an audible tone, light emission, vibration, and display.

## Patentansprüche

1. Selektiver Personenrufempfänger mit:
a) mehreren Rufmeldeeinrichtungen (13, 15, 17, 18), um einem Benutzer einen Ruf zu melden;
b) einer optionalen Detektionseinrichtung (4) zum Vergleichen von Informationen in einem empfangenen Funksignal mit einer vorab zugewiesenen selektiven Rufnummer des Empfängers, um einen Ruf für den Empfänger zu detektieren;
c) einer Modusumschalteinrichtung (9) zum Umschalten zwischen einem manuellen Rücksetzmodus zum manuellen Stoppen eines Betriebs jeder der Rufmeldeeinrichtungen (13, 15, 17, 18) und einem automatischen Rücksetzmodus zum automatischen Stoppen des Betriebs;
d) einer Einstelleinrichtung (11) zum selektiven Einstellen jeder der Rufmeldeeinrichtungen (13, 15, 17, 18) in dem automatischen Rücksetzmodus, wenn der manuelle Rücksetzmodus ausgewählt wurde; und
e) einer optionalen Zeitgliedeinrichtung (8) zum automatischen Stoppen jeder der durch die Einstelleinrichtung (11) ausgewählten Rufmeldeeinrichtungen (13, 15, 17, 18), wenn eine vorbestimmte Zeitdauer nach Rufbeginn in dem manuellen Rücksetzmodus abgelaufen ist.

2. Empfänger nach Anspruch 1, wobei die Einstelleinrichtung (11) mehrere Einstellschalter (SW1 bis SW4) aufweist, die in eineindeutiger Entsprechung mit den mehreren Rufmeldeeinrichtungen (13, 15, 17, 18) vorgesehen sind.

3. Empfänger nach Anspruch 1 oder 2, wobei die Rufmeldeeinrichtungen (13, 15, 17, 18) Rufmeldebetriebsabläufe unter Verwendung eines Hörtons, einer Lichtausstrahlung, einer Schwingung und einer Anzeige durchführen.

4. Empfänger nach Anspruch 1, 2 oder 3, ferner mit einer Rufmelde-Steuereinrichtung (7) zum Starten des Betriebs jeder Rufmeldeeinrichtung (13, 15, 17, 18) und Betreiben der Zeitgliedeinrichtung (8) bei Detektieren eines Rufs für den Empfänger in Übereinstimmung mit einer Ausgabe von der Detektionseinrichtung (4), Prüfen eines Zustands der Modusumschalteinrichtung (9) in Übereinstimmung mit einer Ausgabe von der Zeitgliedeinrichtung (8), wenn eine vorbestimmte Zeitdauer abgelaufen ist, Prüfen eines Zustands der Einstelleinrichtung (11), wenn die Modusumschalteinrichtung (9) in einem manuellen Modus ist, und Stoppen eines Betriebs der durch die Einstelleinrichtung (11) ausgewählten Rufmeldeeinrichtungen (13, 15, 17, 18).

5. Empfänger nach einem der Ansprüche 1 bis 4, wobei die Zeitgliedeinrichtung (8) ein automatisches Rücksetzzeitglied zum automatischen Stoppen jeder Rufmeldeeinrichtung (13, 15, 17, 18) ist, wenn eine vorbestimmte Zeitdauer nach Rufbeginn in dem automatischen Rücksetzmodus abgelaufen ist, und die vorbestimmte Zeitdauer nach Rufbeginn bis zu dem automatischen Stoppen in dem manuellen Modus und dem automatischen Rücksetzmodus gleich ist.

6. Empfänger nach einem der Ansprüche 1 bis 4, wobei die Zeitgliedeinrichtung (8) unabhängig von einem automatischen Rücksetzzeitglied zum automatischen Stoppen jeder Rufmeldeeinrichtung (13, 15, 17, 18) vorgesehen ist, wenn eine vorbestimmte Zeitdauer nach Rufbeginn in dem automatischen Rücksetzmodus abgelaufen ist, und sich die vorbestimmte Zeitdauer nach Rufbeginn bis zu dem automatischen Stoppen in dem manuellen Modus von der in dem automatischen Rücksetzmodus unterscheidet.

7. Selektiver Personenrufempfänger mit:
mehreren Rufmeldeeinrichtungen (13, 15, 17, 18), um einem Benutzer einen Ruf zu melden;
einer Rufmelde-Detektionseinrichtung (4) zum Vergleichen von Informationen in einem empfangenen Funksignal mit vorab zugewiesenen selektiven Rufnummern für einen Normalruf und einen Notruf des Empfängers, um eine Detektion eines Rufs für den Empfänger sowie eine Identifikation einer Rufart durchzuführen;
einer Einstelleinrichtung (21) zum selektiven Einstellen jeder der Rufmeldeeinrichtungen (13, 15, 17, 18) in dem automatischen Rücksetzmodus bei Ruf durch den Notruf; und
einer Zeitgliedeinrichtung (8) zum automatischen Stoppen jeder der durch die Einstelleinrichtung (21) ausgewählten Rufmeldeeinrichtungen (13, 15, 17, 18), wenn eine vorbestimmte Zeitdauer nach Rufbeginn abgelaufen ist, sofern das Rufen durch den Notruf erfolgt.

8. Empfänger nach Anspruch 7, wobei die Einstelleinrichtung (21) mehrere Einstellschalter (SW1 bis SW4) aufweist, die in eineindeutiger Entsprechung mit den mehreren Rufmeldeeinrichtungen vorgesehen sind.

9. Empfänger nach Anspruch 7 oder 8, wobei die Rufmeldeeinrichtungen (13, 15, 17, 18) Rufmeldebetriebabläufe unter Verwendung eines Hörtons, einer Lichtausstrahlung, einer Schwingung und einer Anzeige durchführen.

## Revendications

1. Récepteur sélectif d'appel de personnes comprenant :
a) une pluralité de moyens d'information d'appel (13, 15, 17, 18) pour informer un utilisateur d'un appel ;
b) des moyens de détection facultatifs (4) pour comparer les informations incluses dans un signal radio reçu à un numéro d'appel sélectif préattribué dudit récepteur pour détecter un appel pour ledit récepteur ;
c) des moyens de commutation de mode (9) pour effectuer une commutation entre un mode manuel de remise à l'état initial pour arrêter manuellement une mise en oeuvre de chacun desdits moyens d'information d'appel (13, 15, 17, 18) et un mode automatique de remise à l'état initial pour arrêter automatiquement la mise en oeuvre ;
d) des moyens de paramétrage (11) pour paramétrer, de manière sélective, en mode automatique de remise à l'état initial, l'un quelconque desdits moyens d'information d'appel (13, 15, 17, 18) lorsque le mode manuel de remise à l'état initial a été choisi ; et
e) des moyens formant minuterie facultatifs (8) pour arrêter automatiquement l'un quelconque desdits moyens d'information d'appel (13, 15, 17, 18) sélectionné par lesdits moyens de paramétrage (11) quand une durée prédéterminée s'est écoulée depuis le début de l'appel en mode manuel de remise à l'état initial.

2. Récepteur selon la revendication 1, dans lequel lesdits moyens de paramétrage (11) comprennent une pluralité de commutateurs de paramétrage (SW1 à SW4) disposés en correspondance un à un avec ladite pluralité de moyens d'information d'appel (13, 15, 17, 18).

3. Récepteur selon la revendication 1 ou 2, dans lequel lesdits moyens d'information d'appel (13, 15, 17, 18) effectuent des opérations d'information d'appel en utilisant un son audible, une émission de lumière, des vibrations, et un affichage.

4. Récepteur selon la revendication 1, 2 ou 3, comprenant de plus des moyens de commande d'information d'appel (7) pour démarrer la mise en oeuvre de chaque moyen d'information d'appel (13, 15, 17, 18) et pour mettre en oeuvre lesdits moyens formant minuterie (8) lors de la détection d'un appel pour ledit récepteur selon une sortie en provenance desdits moyens de détection (4), pour vérifier un état desdits moyens de commutation de mode (9) selon une sortie en provenance desdits moyens formant minuterie (8) quand une durée prédéterminée s'est écoulée, pour vérifier un état desdits moyens de paramétrage (11) lorsque lesdits moyens de commutation de mode (9) sont dans un mode manuel, et pour arrêter une mise en oeuvre desdits moyens d'information d'appel (13, 15, 17, 18) sélectionnés par lesdits moyens de paramétrage (11).

5. Récepteur selon l'une quelconque des revendications 1 à 4, dans lequel lesdits moyens formant minuterie (8) sont une minuterie automatique de remise à l'état initial pour arrêter automatiquement chaque moyen d'information d'appel (13, 15, 17, 18) quand une durée prédéterminée s'est écoulée après le début d'un appel en mode automatique de remise à l'état initial, et dans lequel la durée prédéterminée depuis le début de l'appel à l'arrêt automatique est la même en mode manuel et en mode automatique de remise à l'état initial.

6. Récepteur selon l'une quelconque des revendications 1 à 4, dans lequel lesdits moyens formant minuterie (8) sont prévus indépendamment d'une minuterie automatique de remise à l'état initial pour arrêter automatiquement chaque moyen d'information d'appel (13, 15, 17, 18) quand une durée prédéterminée s'est écoulée depuis le début d'un appel en mode automatique de remise à l'état initial, et dans lequel la durée prédéterminée depuis le début de l'appel à l'arrêt automatique en mode manuel est différente de celle en mode automatique de remise à l'état initial.

7. Récepteur sélectif d'appel de personnes comprenant :
une pluralité de moyens d'information d'appel (13, 15, 17, 18) pour informer un utilisateur d'un appel ;
des moyens de détection d'information d'appel (4) pour comparer les informations incluses dans un signal radio reçu à des numéros d'appel sélectif préattribués pour un appel normal et pour un appel d'urgence dudit récepteur pour effectuer la détection d'un appel pour ledit récepteur et l'identification du type de l'appel ;
des moyens de paramétrage (21) pour paramétrer, de manière sélective, en mode automatique de remise à l'état initial, l'un quelconque desdits moyens d'information d'appel (13, 15, 17, 18) lors d'un appel par l'appel d'urgence et
des moyens formant minuterie (8) pour arrêter automatiquement l'un quelconque desdits moyens d'information d'appel (13, 15, 17, 18) sélectionné par lesdits moyens de paramétrage (21) quand une durée prédéterminée s'est écoulée depuis le début de l'appel si l'appel est effectué par l'appel d'urgence.

8. Récepteur selon la revendication 7, dans lequel lesdits moyens de paramétrage (21) comprennent une pluralité de commutateurs de paramétrage (SW1 à SW4) disposés en correspondance un à un avec ladite pluralité de moyens d'information d'appel.

9. Récepteur selon la revendication 7 ou 8, dans lequel lesdits moyens d'information d'appel (13, 15, 17, 18) effectuent des opérations d'information d'appel en utilisant un son audible, une émission de lumière, des vibrations, et un affichage.
